(19) Europäisches Patentamt
European Patent Office
Office européen des brevets

(11) **EP 1 541 973 B1**

(12) **EUROPÄISCHE PATENTSCHRIFT**

(45) Veröffentlichungstag und Bekanntmachung des Hinweises auf die Patenterteilung:
**12.11.2008 Patentblatt 2008/46**

(51) Int Cl.:
***G01F 1/60*** (2006.01)

(21) Anmeldenummer: **04021992.5**

(22) Anmeldetag: **16.09.2004**

(54) **Magnetisch-induktives Durchflussmessgerät und Messverfahren für ein magnetisch-induktives Durchflussmessgerät**

Electromagnetic flowmeter and measuring method for an electromagnetic flowmeter

Débitmètre magnéto-inductif et procédé de mesure pour un débitmètre magnéto-inductif

(84) Benannte Vertragsstaaten:
**AT BE BG CH CY CZ DE DK EE ES FI FR GB GR HU IE IT LI LU MC NL PL PT RO SE SI SK TR**

(30) Priorität: **08.12.2003 DE 10357514**

(43) Veröffentlichungstag der Anmeldung:
**15.06.2005 Patentblatt 2005/24**

(73) Patentinhaber: **KROHNE MESSTECHNIK GMBH & CO. KG**
**47058 Duisburg (DE)**

(72) Erfinder:
• **Brockhaus, Helmut, Dr.**
**46537 Dinslaken (DE)**
• **Florin, Wilhelm**
**47198 Duisburg (DE)**

(74) Vertreter: **Gesthuysen, von Rohr & Eggert**
**Patentanwälte**
**Postfach 10 13 54**
**45013 Essen (DE)**

(56) Entgegenhaltungen:
| | |
|---|---|
| DE-A- 19 716 151 | US-A- 4 010 644 |
| US-A- 4 748 856 | US-B1- 6 237 424 |

**Beschreibung**

Die Erfindung betrifft ein magnetisch-induktives Durchflußmeßgerät, zur Messung des Volumendurchflusses eines durch ein Meßrohr strömenden Mediums, mit einem Magneten zur Erzeugung eines das Meßrohr durchsetzenden Magnetfelds mit einer senkrecht zur Strömungsrichtung verlaufenden Magnetfeldkomponente, einer ersten Meßelektrode und einer zweiten Meßelektrode zum Abgreifen einer in dem Medium induzierten Spannung, einer Referenzelektrode und einem Vorverstärker, auf den die an den beiden Meßelektroden abgegriffenen Potentiale geführt werden. Die Erfindung betrifft außerdem ein Meßverfahren für ein magnetisch-induktives Durchflußmeßgerät, zur Messung des Volumendurchflusses eines durch ein Meßrohr strömenden Mediums, wobei das magnetisch-induktive Durchflußmeßgerät einen Magneten zur Erzeugung eines das Meßrohr durchsetzenden Magnetfelds mit einer senkrecht zur Strömungsrichtung verlaufenden Magnetfeldkomponente, eine erste Meßelektrode und eine zweite Meßelektrode zum Abgreifen einer in dem Medium induzierten Spannung, eine Referenzelektrode und einen Vorverstärker aufweist, auf den die an den beiden Meßelektroden abgegriffenen Potentiale geführt werden.

Zuvor und im folgenden werden die Begriffe "Spannung" und "Potential" derart verwendet, daß von einer "Spannung" gesprochen wird, wenn eine konkrete Potentialdifferenz zwischen zwei Punkten gemeint ist. Von "Potential" wird dann gesprochen, wenn das elektrische Potential eines bestimmten Punktes in einem vorbestimmten Potentialsystem, also z. B. gegenüber Masse oder Erde, bezeichnet werden soll.

Magnetisch-induktive Durchflußmeßgeräte und Meßverfahren für magnetisch-induktive Durchflußgeräte der eingangs genannten Art sind schon seit längerer Zeit gut bekannt und werden in vielfältigen unterschiedlichen Einsatzgebieten verwendet. Das grundlegende Prinzip eines magnetisch-induktiven Durchflußmeßgeräts zur Messung des Volumendurchflusses eines durch ein Meßrohr strömenden Mediums geht dabei bereits auf Faraday zurück, der im Jahre 1832 vorgeschlagen hat, das Prinzip der elektrodynamischen Induktion zur Strömungsgeschwindigkeitsmessung anzuwenden.

Nach dem Faraday'schen Induktionsgesetz entsteht in einem strömenden Medium, das Ladungsträger mit sich führt und durch ein Magnetfeld hindurchfließt, eine elektrische Feldstärke senkrecht zur Strömungsrichtung und senkrecht zum Magnetfeld. Das Faraday'sche Induktionsgesetz wird bei einem magnetisch-induktiven Durchflußmeßgerät dadurch ausgenutzt, daß ein Magnet, im allgemeinen bestehend aus zwei Magnetpolen mit je einer Magnetspule, ein Magnetfeld erzeugt, das eine Magnetfeldkomponente senkrecht zur Strömungsrichtung in dem Meßrohr enthält. Innerhalb dieses Magnetfelds liefert jedes sich durch das Magnetfeld bewegende und eine gewisse Anzahl von Ladungsträgern aufweisende Volumenelement des strömenden Mediums mit der in diesem Volumenelement entstehenden Feldstärke einen Beitrag zur über die Meßelektroden abgreifbaren Spannung.

Die Meßelektroden werden bei den bekannten magnetisch-induktiven Durchflußmeßgeräten derart ausgeführt, daß sie entweder galvanisch oder kapazitiv mit dem strömenden Medium gekoppelt sind. Ein besonderes Merkmal der magnetisch-induktiven Durchflußmeßgeräte ist ferner die Proportionalität zwischen der Meßspannung einerseits und der über den Querschnitt des Meßrohrs gemittelten Strömungsgeschwindigkeit des Mediums andererseits, das heißt zwischen Meßspannung und Volumenstrom.

Im eigentlichen Durchflußmeßbetrieb wird bei einem magnetisch-induktiven Durchflußmeßgerät im allgemeinen das Magnetfeld zeitlich alternierend umgeschaltet. Aus dem Stand der Technik sind dazu unterschiedliche Vorgehensweisen bekannt. Eine magnetisch-induktive Durchflußmessung ist z. B. mit einem Wechselfeld möglich, wobei typischerweise die Magnetspulen des Magneten direkt vom Stromnetz mit einer sinusförmigen 50-Hz-Wechselspannung gespeist werden. Die aufgrund der Strömung erzeugte Spannung zwischen den Meßelektroden wird dabei jedoch leicht durch transformatorische Störspannungen und Netzstörspannungen gestört.

In jüngerer Zeit wird bei magnetisch-induktiven Durchflußmeßgeräten im allgemeinen mit einem geschalteten Gleichfeld gearbeitet. Ein solches geschaltetes Gleichfeld erhält man, indem den Magnetspulen des Magneten ein Strom mit zeitlich im wesentlichen rechteckförmigem Verlauf zugeführt wird, der seine Polarität zeitlich alternierend ändert. Möglich ist jedoch auch die Verwendung eines pulsierenden Gleichfelds, das dadurch erhalten wird, daß die Magnetspulen des Magneten nur periodenweise mit einem zeitlich rechteckförmigen, immer die gleiche Polarität aufweisenden Strom versorgt werden. Ein Verfahren, bei dem der Feldstrom periodisch umgepolt wird, also ein periodisch alternierendes Magnetfeld erzeugt wird, ist jedoch vorzuziehen, da durch die Änderung der Polarität des Magnetfelds Störgrößen wie elektrochemische Störgrößen, unterdrückt werden. Die zum Durchfluß proportionale Spannung zwischen den Meßelektroden ist im allgemeinen sehr klein, liegt nämlich im Mikrovolt-Bereich. Diese Spannung muß mit hoher Auflösung (ca. 100 nV) gemessen werden; und die Meßfrequenz liegt bei den bekannten magnetisch-induktiven Durchflußmeßgeräten, die nach dem Prinzip des geschalteten Gleichfelds arbeiten, im Bereich von 1 bis 100 Hz.

Die an den Meßelektroden abgegriffene Spannung wird bei den bekannten magnetisch-induktiven Durchflußmeßgeräten im allgemeinen einem Vorverstärker zugeführt, bevor das vorverstärkte, dem Durchfluß proportionale Spannungssignal weiterverarbeitet wird. Als Vorverstärker werden häufig Differenzverstärker verwendet, die typischerweise mit einer Versorgungsspannung von ± 15 V betrieben werden. Der Aussteuerbereich, also die betragsmäßig maximale Ausgangsspannung des Vorverstärkers liegt damit bei 15 V, nämlich + 15 V für positive Signale und - 15 V für negative Signale. Bei der Verwendung eines mit ± 15 V Versorgungsspannung betriebenen Vorverstärkers wird die Referenzelektrode des magnetisch-induktiven Durchflußmeßgeräts im allgemeinen auf einem Potential von 0 V, also auf Erdpotential, gehalten.

Es besteht jedoch der Wunsch, Vorverstärker für magnetisch-induktive Durchflußmeßgeräte auch mit geringeren Versorgungsspannungen, z. B. mit einer Versorgungsspannung von 5 V (0 V, + 5 V) zu betreiben. Mit einem solchen Verstärker wäre grundsätzlich ein Aussteuerbereich von 0 V bis 5 V möglich. Entsprechende analoge Bauteile für den Versorgungsspannungsbereich von 0 V bis 5 V sind zwischenzeitlich verfügbar geworden, hochgenaue Sigma-Delta-Wandler arbeiten mit diesen niedrigen Eingangsspannungen, und insbesondere wird die Verlustleistung verringert.

Es ist die Aufgabe der Erfindung, ein solches magnetisch-induktives Durchflußmeßgerät sowie ein solches Meßverfahren für ein magnetisch-induktives Durchflußmeßgerät anzugeben, mit denen ein effektiver Betrieb mit einem mit geringen Versorgungsspannung betriebenen Vorverstärker ermöglicht wird.

Ausgehend von dem eingangs beschriebenen magnetisch-induktiven Durchflußmeßgerät ist die zuvor hergeleitete und aufgezeigte Aufgabe dadurch gelöst, daß eine Steuerschaltung zur derartigen Beeinflussung der Gleichtakteingangsspannung des Vorverstärkers oder/und des Potentialbereichs des Aussteuerbereichs des Vorverstärkers vorgesehen ist, daß die Gleichtakteingangsspannung des Vorverstärkers der halben maximalen Ausgangsspannung des Vorverstärkers angenähert wird, wobei die Steuerschaltung mit der Referenzelektrode verbunden ist und zur Steuerung des Potentials der Referenzelektrode vorgesehen ist.

Daß erfindungsgemäß vorgesehen ist, daß die Gleichtakteingangsspannung des Vorverstärkers der halben maximalen Ausgangsspannung des Vorverstärkers angenähert wird, bedeutet, daß die Differenz zwischen der Gleichtakteingangsspannung und der halben maximalen Ausgangsspannung so gering wie möglich gemacht werden soll. Dabei wird sich im allgemeinen jedoch keine vollständige und insbesondere auch keine instantane Angleichung erzielen lassen. Die Beeinflussung des Potentialbereichs des Aussteuerbereichs des Vorverstärkers bedeutet dabei insbesondere, daß der Aussteuerbereich, z. B. 0 V bis 5 V bei einer nutzbaren Versorgungsspannung von 5 V konstant bleibt, jedoch potentialmäßig verschoben wird, also z. B. von 1 V bis 6 V reicht. Gleichzeitig oder alternativ dazu kann die Gleichtakteingangsspannung des Vorverstärkers beeinflußt werden, um die Gleichtakteingangsspannung des Vorverstärkers der halben maximalen Ausgangsspannung des Vorverstärkers anzunähern.

Dabei kann gemäß einer bevorzugten Weiterbildung der Erfindung ferner vorgesehen sein, daß die Steuerschaltung auch mit der ersten Meßelektrode und der zweiten Meßelektrode verbunden ist, um das Potential der Referenzelektrode in Abhängigkeit von den Potentialen der Meßelektroden zu steuern.

Weiterhin ist gemäß einer bevorzugten Weiterbildung der Erfindung vorgesehen, daß die Steuerschaltung eine invertierende Differenzverstärkerschaltung mit einem Differenzverstärker aufweist, dessen invertierender Eingang über einen ersten Widerstand mit der ersten Meßelektrode und über einen zweiten Widerstand mit der zweiten Meßelektrode verbunden ist. Dabei kann insbesondere vorgesehen sein, daß der nichtinvertierende Eingang des Differenzverstärkers auf etwa der halben maximalen Ausgangsspannung des Vorverstärkers gehalten wird. Konkret würde dies bei einem Vorverstärker, der mit 0 V und 5 V versorgt wird, bedeuten, daß der nichtinvertierende Eingang des Differenzverstärkers auf etwa 2,5 V gehalten wird.

Bei einer solchen Steuerschaltung, wie zuvor beschrieben, ist vorzugsweise insbesondere vorgesehen, daß eine Verbindung mit der Referenzelektrode über den Ausgang der Steuerschaltung erfolgt. Schließlich kann gemäß einer bevorzugten Weiterbildung der Erfindung vorgesehen sein, daß der invertierende Eingang des Differenzverstärkers über einen Gegenkoppelwiderstand mit dem Ausgang des Differenzverstärkers verbunden ist, wobei insbesondere parallel dazu ein Kondensator geschaltet sein kann. Ein solcher Kondensator dient der Bandbegrenzung und damit der Stabilität der Steuerung.

Ausgehend von dem eingangs beschriebenen Meßverfahren für ein magnetisch-induktives Durchflußmeßgerät ist die weiter oben hergeleitete und aufgezeigte Aufgabe dadurch gelöst, daß die Gleichtakteingangsspannung des Verstärkers oder/und der Potentialbereich des Ansteuerbereichs des Vorverstärkers derart beeinflußt werden, daß die Gleichtakteingangsspannung des Vorverstärkers der halben maximalen Ausgangsspannung des Vorverstärkers angenähert wird und das Potential der Referenzelektrode in Abhängigkeit von den Potentialen der Meßelektroden gesteuert wird.

Bevorzugte Weiterbildungen des erfindungsgemäßen Meßverfahrens für ein magnetisch-induktives Durchflußmeßgerät ergeben sich in Analogie zu den zuvor beschriebenen bevorzugten Weiterbildungen des erfindungsgemäßen magnetisch-induktiven Durchflußmeßgeräts.

Im einzelnen gibt es nun eine Vielzahl von Möglichkeiten, das magnetisch-induktive Durchflußmeßgerät sowie das Meßverfahren für ein magnetisch-induktives Durchflußmeßgerät auszugestalten und weiterzubilden. Dazu wird auf die den unabhängigen Patentansprüchen nachgeordneten Patentansprüche sowie auf die nachfolgende detaillierte Beschreibung eines bevorzugten Ausführungsbeispiels der Erfindung unter Bezugnahme auf die Zeichnung verwiesen. In der Zeichnung zeigt

Fig. 1    schematisch ein magnetisch-induktives Durchflußmeßgerät gemäß einem bevorzugten Ausführungsbeispiel der Erfindung zusammen mit dem verwendeten Steuerverfahren und

Fig. 2    schematisch das magnetisch-induktive Durchflußmeßgerät gemäß dem bevorzugten Ausführungsbeispiel der Erfindung einschließlich der Steuerschaltung.

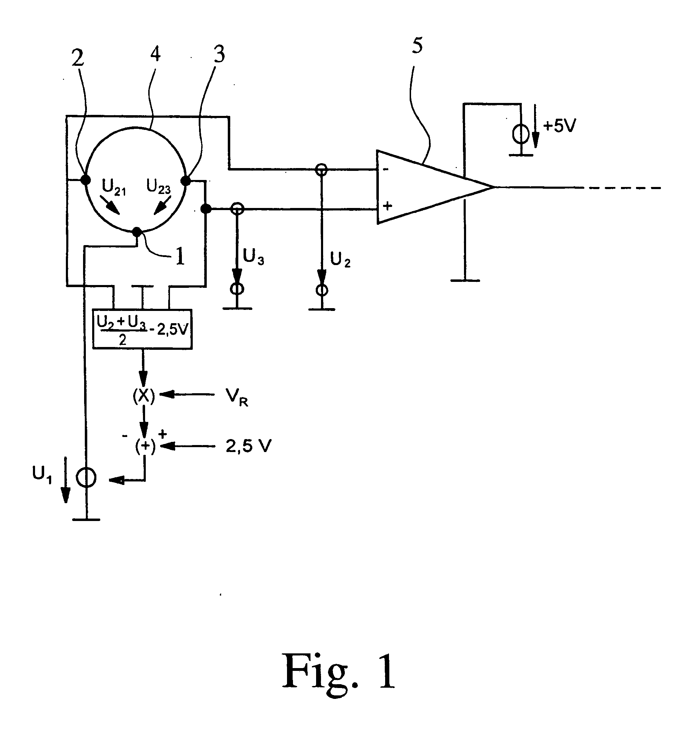

Fig. 1 zeigt schematisch ein magnetisch-induktives Durchflußmeßgerät zur Messung des Volumendurchflusses eines durch ein Meßrohr 4 strömenden Mediums gemäß einem bevorzugten Ausführungsbeispiel der Erfindung. Mit einem nicht weiter dargestellten Magneten wird ein das Meßrohr 4 senkrecht zur Strömungsrichtung durchsetzendes Magnetfeld erzeugt. Dadurch wird beim Durchströmen des Meßrohrs 4 mit einem elektrisch leitfähigen Medium eine Spannung generiert. Diese kann über eine erste Meßelektrode 2 und eine zweite Meßelektrode 3 abgegriffen werden, die mit dem strömenden Medium in galvanisch leitendem Kontakt stehen. Im unteren Bereich des Meßrohrs 4 ist eine mit dem Medium in galvanisch leitendem Kontakt stehende Referenzelektrode 1 vorgesehen. Das an den Meßelektroden 2, 3 abgegriffene Spannungssignal wird auf einen als Differenzverstärker ausgebildeten Vorverstärker 5 geführt. Dieser wird mit einer Versorgungsspannung von 0 V/5 V betrieben.

Im Gegensatz zu dem Betrieb von herkömmlichen magnetisch-induktiven Durchflußmeßgeräten wird die Referenzelektrode 1 nun nicht auf einem konstanten Potential gehalten. Vielmehr erfolgt gemäß dem vorliegend beschriebenen bevorzugten Ausführungsbeispiel der Erfindung eine Steuerung des Potentials der Referenzelektrode 1, und zwar wie folgt:

Die Gleichtakteingangsspannung des Vorverstärkers ergibt sich aus dem Mittelwert der auf den invertierenden bzw. auf den nichtinvertierenden Eingang des Vorverstärkers geführten Potentiale $U_2$ und $U_3$. Diese Potentiale $U_2$ und $U_3$ setzen sich jeweils zusammen aus der Summe der Spannung $U_{21}$, $U_{31}$ einer Meßelektrode 2, 3 gegenüber der Referenzelektrode 1 und der Spannung $U_1$ der Referenzelektrode 1 gegenüber Masse. Es gilt also:

$$U_{21} + U_1 = U_2$$

$$U_{31} + U_1 = U_3$$

$$\frac{U_{21} + U_{31}}{2} + U_1 = \frac{U_2 + U_3}{2}.$$

Wie schematisch in Fig. 1 dargestellt, ist gemäß dem vorliegend beschriebenen bevorzugten Ausführungsbeispiel der Erfindung in Abhängigkeit von den an den Meßelektroden 2, 3 abgegriffenen Potentialen $U_{21}$, und $U_{31}$ eine Steuerung des Potentials $U_1$ der Referenzelektrode 1 vorgesehen, die unter anderen eine Verstärkung um den Faktor $V_R$ umfaßt und sich formelmäßig wie folgt darstellen läßt:

$$-\left(\frac{U_2 + U_3}{2} - 2{,}5V\right) \cdot V_R + 2{,}5V = U_1$$

$$-\left(\frac{U_{21} + U_{31}}{2} + U_1 - 2{,}5V\right)V_R + 2{,}5V = U_1$$

$$-\frac{U_{21} + U_{31}}{2} V_R + 2{,}5V\left(V_R + 1\right) = U_1 + U_1 V_R$$

$$2{,}5V - \frac{U_{21} + U_{31}}{2}\frac{V_R}{V_R + 1} = U_1$$

.

Welche Auswirkung diese Steuerung auf das Potential $U_1$ der Referenzelektrode 1 und damit auf die Gleichtakteingangsspannung $(U_2 + U_3)/2$ hat, ist exemplarisch den in der nachfolgenden Tabelle dargestellten Beispielen entnehmbar:

| $\dfrac{U_{21} + U_{31}}{2}$ | $V_R$ | $U_1$ | $\dfrac{U_2 + U_3}{2}$ |
|---|---|---|---|
| 0 V | egal | 2,5 V | 2,5 V |
| 2V | 2 | 1,17V | 3,17 V |
| 2 V | 100 | 0,52 V | 2,52 V |
| 2 V | 0 | 2,5 V | 4,5 V |
| -2 V | 2 | 3,83 V | 1,83 V |
| -2 V | 100 | 4,48 V | 2,48 V |
| -2 V | 0 | 2,5 V | 0,5 V |

Wie oben schon ausgeführt, sieht die Steuerung gemäß dem vorliegend beschriebenen bevorzugten Ausführungsbeispiel der Erfindung eine Verstärkung um den Faktor $V_R$ vor. Ohne eine solche Verstärkung, also für den Fall $V_R = 0$, ergibt sich die aus dem Stand der Technik bekannte Situation: Gilt für die zwischen den Meßelektroden 2, 3 einerseits und der Referenzelektrode 1 anliegenden Spannungen $U_{21}$ und $U_{31}$ zusammen $(U_{21} + U_{31})/2 = 2$ V, so ergibt sich bei einem Verstärkungsfaktor von 0 ($V_R = 0$) ein Potential $U_1$ der Referenzelektrode 1 von 2,5 V, so daß die Gleichtakteingangsspannung des Vorverstärkers bei 4,5 V liegt. Das bedeutet, daß der Aussteuerbereich des Vorverstärkers bereits fast vollständig erschöpft ist. Entsprechendes gilt für $(U_{21} + U_{31})/2 = -2$ V; hier ergibt sich eine Gleichtakteingangsspannung des Vorherstärkers 5 von 0,5 V, was ebenfalls bereits fast einer vollständigen Erschöpfung des Aussteuerbereichs des Vorverstärkers 5 entspricht.

Bei einem Verstärkungsfaktor $V_R = 100$ ergibt sich demgegenüber eine erhebliche Verbesserung: Für $(U_{21} + U_{31})/2 = \pm 2$ V ergibt sich für die Gleichtakteingangsspannung des Vorverstärkers 5 ein Wert von $2{,}5 \pm 0{,}02$ V, so daß der Vorverstärker 5 praktisch noch nicht ausgesteuert ist. Dies rührt unter anderem daher, daß durch die Steuerung aufgrund des Verstärkungsfaktors von 100 ein Potential $U_1$ der Referenzelektrode 1 erzielt wird, das deutlich von dem im Stand der Technik konstant auf 2,5 V gehaltenen Wert abweicht, nämlich bei 0,52 V bzw. bei 4,48 V liegt.

Schließlich ergibt sich aus der Tabelle auch, daß sich eine deutliche Verbesserung der Situation schon für wesentlich geringere Verstärkungsfaktoren ergibt, nämlich ein Verstärkungsfaktor $V_R = 2$ ebenfalls schon eine bessere Ausschöpfung des Aussteuerbereichs des Vorverstärkers 5 für Differenzsignale zuläßt.

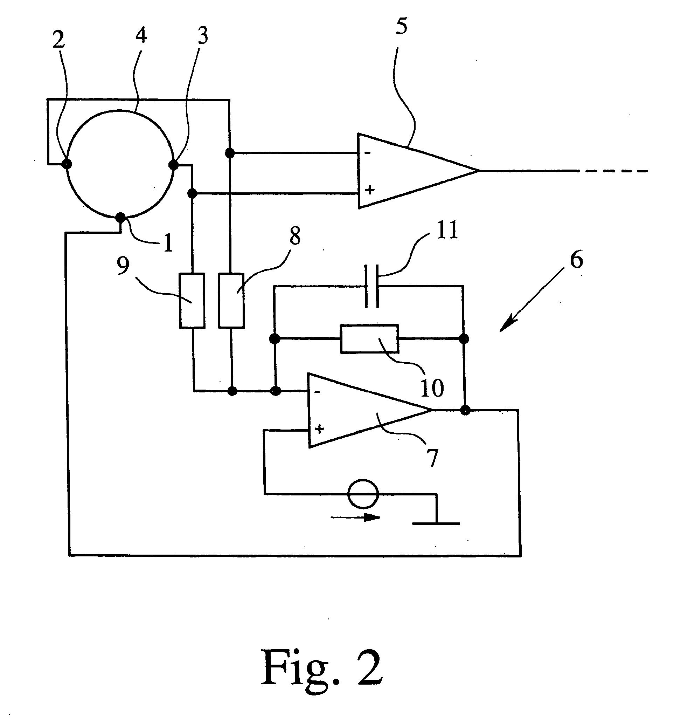

Eine konkrete Realisierung einer Steuerschaltung, mit der das zuvor genannte Steuerverfahren gemäß dem bevorzugten Ausführungsbeispiel der Erfindung durchgeführt werden kann, ist Fig. 2 schematisch entnehmbar. Dort ist gezeigt, daß die Steuerschaltung mit der Referenzelektrode 1, der ersten Meßelektrode 2 und der zweiten Meßelektrode 3 verbunden ist, um das Potential der Referenzelektrode 1 in Abhängigkeit von den Potentialen der Meßelektroden 2, 3 zu steuern. Dazu weist die Steuerschaltung eine invertierende Differenzverstärkerschaltung 6 mit einem Differenzverstärker 7 auf, dessen invertierender Eingang über einen ersten Widerstand 8 mit der ersten Meßelektrode 2 und über einen zweiten Widerstand 9 mit der zweiten Meßelektrode 3 verbunden ist. Der nichtinvertierende Eingang des Differenzverstärkers 7 wird auf etwa der halben maximalen Ausgangsspannung des Vorverstärkers 5 gehalten, vorliegend also bei etwa 2,5 V, da der Vorverstärker 5 mit 0 V/5 V versorgt wird. Schließlich ist der Ausgang des Differenzverstärkers 7 auf die Referenzelektrode 1 geführt.

Der invertierende Eingang des Differenzverstärkers 7 ist mit seinem Ausgang über einen Gegenkoppelwiderstand 10 verbunden. Sind der erste Widerstand 8, der zweite Widerstand 9 und der Gegenkoppelwiderstand 10 betragsmäßig gleich, so ergibt sich ein Verstärkungsfaktor $V_R = 2$, was schon eine wesentlich bessere Ausschöpfung des Aussteuerbereichs des Vorverstärkers 5 zur Folge hat, wie obiger Tabelle entnehmbar. Schließlich ist parallel zum Gegenkoppelwiderstand 10 ein Kondensator 11 geschaltet, um eine Bandbegrenzung und damit eine verbesserte Stabilität der Steuerung zu erzielen.

**Patentansprüche**

1. Magnetisch-induktives Durchflußmeßgerät, zur Messung des Volumendurchflusses eines durch ein Meßrohr (4) strömenden Mediums, mit einem Magneten zur Erzeugung eines das Meßrohr (4) durchsetzenden Magnetfelds mit einer senkrecht zur Strömungsrichtung verlaufenden Magnetfeldkomponente, einer ersten Meßelektrode (2) und einer zweiten Meßelektrode (3) zum Abgreifen einer in dem Medium induzierten Spannung, einer Referenzelektrode (1) und einem Vorverstärker (5), auf den die an den beiden Meßelektroden (2, 3) abgegriffenen Potentiale geführt werden, **dadurch gekennzeichnet, daß** eine Steuerschaltung zur derartigen Beeinflussung der Gleichtakteingangsspannung des Vorverstärkers (5) oder/und des Potentialbereichs des Aussteuerbereichs des Vorverstärkers vorgesehen ist, daß die Gleichtakteingangsspannung des Vorverstärkers (5) der halben maximalen Ausgangsspannung des Vorverstärkers (5) angenähert wird, wobei die Steuerschaltung mit der Referenzelektrode (1) verbunden ist und zur Steuerung des Potentials der Referenzelektrode (1) vorgesehen ist.

2. Magnetisch-induktives Durchflußmeßgerät nach Anspruch 1, **dadurch gekennzeichnet, daß** die Steuerschaltung mit der ersten Meßelektrode (2) und der zweiten Meßelektrode (3) verbunden ist, um das Potential der Referenzelektrode (1) in Abhängigkeit von den Potentialen der Meßelektroden (2, 3) zu steuern.

3. Magnetisch-induktives Durchflußmeßgerät nach Anspruch 2, **dadurch gekennzeichnet, daß** die Steuerschaltung eine invertierende Differenzverstärkerschaltung (6) mit einem Differenzverstärker (7) aufweist, dessen invertierender Eingang über einen ersten Widerstand (8) mit der ersten Meßelektrode (2) und über einen zweiten Widerstand (9) mit der zweiten Meßelektrode (3) verbunden ist.

4. Magnetisch-induktives Durchflußmeßgerät nach Anspruch 3, **dadurch gekennzeichnet, daß** der nichtinvertierende Eingang des Differenzverstärkers (7) auf etwa der halben maximalen Ausgangsspannung des Vorverstärkers (5) gehalten wird.

5. Magnetisch-induktives Durchflußmeßgerät nach Anspruch 3 oder 4, **dadurch gekennzeichnet, daß** der Ausgang des Differenzverstärkers (7) auf die Referenzelektrode (1) geführt ist.

6. Magnetisch-induktives Durchflußmeßgerät nach einem der Ansprüche 3 bis 5, **dadurch gekennzeichnet, daß** ein den invertierenden Eingang des Differenzverstärkers (7) mit dem Ausgang des Differenzverstärkers (7) verbindender Gegenkoppelwiderstand (10) vorgesehen ist, und vorzugsweise parallel zu dem Gegenkoppelwiderstand (10) ein Kondensator (11) geschaltet ist.

7. Magnetisch-induktives Durchflußmeßgerät nach einem der Ansprüche 1 bis 6, **dadurch gekennzeichnet, daß** als Vorverstärker (5) ein Differenzverstärker vorgesehen ist.

8. Meßverfahren für ein magnetisch-induktives Durchflußmeßgerät, zur Messung des Volumendurchflusses eines durch ein Meßrohr (4) strömenden Mediums, wobei das magnetisch-induktive Durchflußmeßgerät einen Magneten zur Erzeugung eines das Meßrohr (4) durchsetzenden Magnetfelds mit einer senkrecht zur Strömungsrichtung verlaufenden Magnetfeldkomponente, eine erste Meßelektrode (2) und eine zweite Meßelektrode (3) zum Abgreifen einer in dem Medium induzierten Spannung, einer Referenzelektrode (1) und einem Vorverstärker (5) aufweist, auf den die an den beiden Meßelektroden (2, 3) abgegriffenen Potentiale geführt werden, **dadurch gekennzeichnet, daß** die Gleichtakteingangsspannung des Verstärkers oder/und der Potentialbereich des Aussteuerbereichs des Vorverstärkers (5) derart beeinflußt werden, daß die Gleichtakteingangsspannung des Vorverstärkers (5) der halben maximalen Ausgangsspannung des Vorverstärkers (5) angenähert wird und das Potential der Referenzelektrode (1) in Abhängigkeit von den Potentialen der Meßelektroden (2, 3) gesteuert wird.

9. Meßverfahren nach Anspruch 8, **dadurch gekennzeichnet, daß** zur Steuerung des Potentials der Referenzelektrode (1) in Abhängigkeit von den Potentialen der Meßelektroden (2, 3) eine Differenzverstärkerschaltung (6) mit einem Differenzverstärker (7) verwendet wird, dessen invertierender Eingang über einen ersten Widerstand (8) mit der ersten Meßelektrode (2) und über einen zweiten Widerstand (9) mit der zweiten Meßelektrode (3) verbunden ist, dessen nichtinvertierender Eingang auf etwa der halben maximalen Ausgangsspannung des Vorverstärkers (5) gehalten wird, dessen invertierender Eingang über einen Gegenkoppelwiderstand (10) mit seinem Ausgang verbunden ist und der Ausgang auf die Referenzelektrode (1) geführt wird.

10. Meßverfahren nach Anspruch 9, **dadurch gekennzeichnet, daß** zur Bandbegrenzung ein zu dem Gegenkoppelwiderstand (10) parallel geschalteter Kondensator (11) verwendet wird.

**Claims**

1. Magnetoinductive flowmeter for measuring the volumetric flow rate of a medium which flows through a measuring tube (4), having a magnet for generating a magnetic field which permeates the measuring tube (4) and has a magnetic field component running perpendicular to the direction of flow, a first measuring electrode (2) and a second measuring electrode (3) for tapping off a voltage induced in the medium, a reference electrode (1), and a preamplifier (5) to which the potentials tapped off at the two measuring electrodes (2, 3) are fed, **characterized in that** a control circuit is provided for the purpose of influencing the common-mode input voltage of the preamplifier (5) or/and the potential range of the modulation range of the preamplifier in such a manner that the common-mode input voltage of the preamplifier (5) is approximated to half the maximum output voltage of the preamplifier (5), the control circuit being connected to the reference electrode (1) and being provided for the purpose of controlling the potential of the reference electrode (1).

2. Magnetoinductive flowmeter according to Claim 1, **characterized in that** the control circuit is connected to the first measuring electrode (2) and to the second measuring electrode (3) in order to control the potential of the reference electrode (1) on the basis of the potentials of the measuring electrodes (2, 3).

3. Magnetoinductive flowmeter according to Claim 2, **characterized in that** the control circuit has an inverting differential amplifier circuit (6) having a differential amplifier (7) whose inverting input is connected to the first measuring electrode (2) via a first resistor (8) and is connected to the second measuring electrode (3) via a second resistor (9).

4. Magnetoinductive flowmeter according to Claim 3, **characterized in that** the non-inverting input of the differential amplifier (7) is kept at approximately half the maximum output voltage of the preamplifier (5).

5. Magnetoinductive flowmeter according to Claim 3 or 4, **characterized in that** the output of the differential amplifier (7) is fed to the reference electrode (1).

6. Magnetoinductive flowmeter according to one of Claims 3 to 5, **characterized in that** a negative feedback resistor (10) which connects the inverting input of the differential amplifier (7) to the output of the differential amplifier (7) is provided, and a capacitor (11) is preferably connected in parallel with the negative feedback resistor (10).

7. Magnetoinductive flowmeter according to one of Claims 1 to 6, **characterized in that** a differential amplifier is provided as the preamplifier (5).

8. Measuring method for a magnetoinductive flowmeter for measuring the volumetric flow rate of a medium which flows through a measuring tube (4), the magnetoinductive flowmeter having a magnet for generating a magnetic field which permeates the measuring tube (4) and has a magnetic field component running perpendicular to the direction of flow, a first measuring electrode (2) and a second measuring electrode (3) for tapping off a voltage induced in the medium, a reference electrode (1), and a preamplifier (5) to which the potentials tapped off at the two measuring electrodes (2, 3) are fed, **characterized in that** the common-mode input voltage of the preamplifier or/and the potential range of the modulation range of the preamplifier (5) is/are influenced in such a manner that the common-mode input voltage of the preamplifier (5) is approximated to half the maximum output voltage of the preamplifier (5) and the potential of the reference electrode (1) is controlled on the basis of the potentials of the measuring electrodes (2, 3).

9. Measuring method according to Claim 8, **characterized in that**, in order to control the potential of the reference electrode (1) on the basis of the potentials of the measuring electrodes (2, 3), use is made of a differential amplifier circuit (6) having a differential amplifier (7) whose inverting input is connected to the first measuring electrode (2) via a first resistor (8) and is connected to the second measuring electrode (3) via a second resistor (9), whose non-inverting input is kept at approximately half the maximum output voltage of the preamplifier (5), whose inverting input is connected to its output via a negative feedback resistor (10), and the output is fed to the reference electrode (1).

10. Measuring method according to Claim 9, **characterized in that** a capacitor (11) which is connected in parallel with the negative feedback resistor (10) is used for band-limiting.

**Revendications**

1. Débitmètre magnéto-inductif pour mesurer le débit volumique d'un fluide qui circule à travers un tube de mesure (4), comprenant un aimant pour générer un champ magnétique qui charge le tube de mesure (4) avec une composante de champ magnétique s'étendant perpendiculairement au sens de l'écoulement, une première électrode de mesure (2) et une deuxième électrode de mesure (3) pour prélever une tension induite dans le fluide, une électrode de référence (1) et un préamplificateur (5) auquel sont acheminés les potentiels prélevés sur les deux électrodes de mesure (2, 3), **caractérisé en ce qu'**il est prévu un circuit de commande pour influencer la tension d'entrée en mode commun du préamplificateur (5) et/ou la plage de potentiels de la plage d'excitation du préamplificateur (5) de telle sorte que la tension d'entrée en mode commun du préamplificateur (5) s'approche de la moitié de la tension de sortie maximale du préamplificateur (5), le circuit de commande étant relié avec l'électrode de référence (1) et étant prévu pour commander le potentiel de l'électrode de référence (1).

2. Débitmètre magnéto-inductif selon la revendication 1, **caractérisé en ce que** le circuit de commande est relié avec la première électrode de mesure (2) et la deuxième électrode de mesure (3) pour commander le potentiel de l'électrode de référence (1) en fonction des potentiels des électrodes de mesure (2, 3) .

3. Débitmètre magnéto-inductif selon la revendication 2, **caractérisé en ce que** le circuit de commande présente un circuit amplificateur différentiel inverseur (6) avec un amplificateur différentiel (7) dont l'entrée inverseuse est reliée avec la première électrode de mesure (2) par le biais d'une première résistance (8) et avec la deuxième électrode de mesure (3) par le biais d'une deuxième résistance (9).

4. Débitmètre magnéto-inductif selon la revendication 3, **caractérisé en ce que** l'entrée non inverseuse de l'amplificateur différentiel (7) est maintenue à environ la moitié de la tension de sortie maximale du préamplificateur (5).

5. Débitmètre magnéto-inductif selon la revendication 3 ou 4, **caractérisé en ce que** la sortie de l'amplificateur différentiel (7) est acheminée à l'électrode de référence (1).

6. Débitmètre magnéto-inductif selon l'une des revendications 3 à 5, **caractérisé en ce qu'**il est prévu une résistance de contre-réaction (10) qui relie l'entrée inverseuse de l' amplificateur différentiel (7) avec la sortie de l'amplificateur différentiel (7) et un condensateur (11) est de préférence branché en parallèle avec la résistance de contre-réaction (10).

7. Débitmètre magnéto-inductif selon l'une des revendications 1 à 6, **caractérisé en ce qu'**un amplificateur différentiel est prévu en tant que préamplificateur (5).

8. Procédé de mesure pour un débitmètre magnéto-inductif pour mesurer le débit volumique d'un fluide qui circule à travers un tube de mesure (4), le débitmètre magnéto-inductif présentant un aimant pour générer un champ magnétique qui charge le tube de mesure (4) avec une composante de champ magnétique s'étendant perpendiculairement au sens de l'écoulement, une première électrode de mesure (2) et une deuxième électrode de mesure (3) pour prélever une tension induite dans le fluide, une électrode de référence (1) et un préamplificateur (5) auquel sont acheminés les potentiels prélevés sur les deux électrodes de mesure (2, 3), **caractérisé en ce que** la tension d'entrée en mode commun du préamplificateur et/ou la plage de potentiels de la plage d'excitation du préamplificateur (5) sont influencées de telle sorte que la tension d'entrée en mode commun du préamplificateur (5) s'approche de la moitié de la tension de sortie maximale du préamplificateur (5) et le potentiel de l'électrode de référence (1) est commandé en fonction des potentiels des électrodes de mesure (2, 3).

9. Procédé de mesure selon la revendication 8,
**caractérisé en ce que** pour commander le potentiel de l'électrode de référence (1) en fonction des potentiels des électrodes de mesure (2, 3) on utilise un circuit amplificateur différentiel (6) avec un amplificateur différentiel (7) dont l'entrée inverseuse est reliée avec la première électrode de mesure (2) par le biais d'une première résistance (8) et avec la deuxième électrode de mesure (3) par le biais d'une deuxième résistance (9), dont l'entrée non inverseuse est maintenue à environ la moitié de la tension de sortie maximale du préamplificateur (5), dont l'entrée inverseuse est reliée à sa sortie par le biais d'une résistance de contre-réaction (10) et dont la sortie est acheminée à l'électrode de référence (1).

10. Procédé de mesure selon la revendication 9, **caractérisé en ce qu'**un condensateur (11) branché en parallèle avec la résistance de contre-réaction (10) est utilisé pour la limitation de la bande.

Fig. 1

Fig. 2